# EUROPEAN PATENT SPECIFICATION

(11) **EP 2 800 443 B1**
(45) Date of publication and mention of the grant of the patent: **06.07.2016**
(21) Application number: 14020057.7
(22) Date of filing: 02.05.2014
(51) Int. Cl.: H04W 76/02, H04W 84/04, H04B 7/02

(54) **Method of handling a cell addition for dual connectivity**
Verfahren zur Handhabung einer Zellhinzufügung für duale Konnektivität
Procédé de manipulation d'un ajout de cellule pour connectivité double

(30) Priority: 02.05.2013 US 201361818883 P; 09.08.2013 US 201361863914 P; 24.02.2014 US 201414187325
(43) Date of publication of application: 05.11.2014
(60) Divisional application: 16153119.9
(73) Proprietor: HTC Corporation, Taoyuan City 330 (TW)
(72) Inventor: Chih-Hsiang, Wu, 330 Taoyuan City (TW)
(74) Representative: Schmidbauer, Andreas Konrad

(56) References cited:
- EP-A2- 2 770 796
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.4.0, 21 December 2012 (2012-12-21), pages 1-208, XP050691592,
- "3rd Generation Partnership Project; Technical Specification Group Radio Access Network; Evolved Universal Terrestrial Radio Access Network (E-UTRAN); X2 application protocol (X2AP) (Release 11)", 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V11.3.0, 18 December 2012 (2012-12-18), pages 1-141, XP050691148,
- "3rd Generation Partnership Project; Technical Specification Group Radio Access Network; Evolved Universal Terrestrial Radio Access (E-UTRA); Radio Resource Control (RRC); Protocol specification (Release 11)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.2.0, 19 December 2012 (2012-12-19), pages 1-340, XP050691590,
- HUAWEI ET AL: "Analysis of inter-node signalling load for mobility mechanism in small cell deployment", 3GPP DRAFT; R2-131260 ANALYSIS OF INTER-NODE SIGNALLING LOAD FOR MOBILITY MECHANISM IN SMALL CELL DEPLOYMENT, 3RD GENERATION PARTNERSHIP PROJECT (3GPP), MOBILE COMPETENCE CENTRE ; 650, ROUTE DES LUCIO , vol. RAN WG2, no. Chicago, USA; 20130415 - 20130419 6 April 2013 (2013-04-06), XP050699466, Retrieved from the Internet: URL:http://www.3gpp.org/ftp/tsg_ran/WG2_RL 2/TSGR2_81bis/Docs/ [retrieved on 2013-04-06]
- SAMSUNG: "Discussion on inter-ENB Carrier Aggregation", 3GPP DRAFT; R2-131069 DISCUSSION ON INTER-ENB CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago, US; 20130415 - 20130419 5 April 2013 (2013-04-05), XP050699237, Retrieved from the Internet: URL:http://www.3gpp.org/ftp/tsg_ran/WG2_RL 2/TSGR2_81bis/Docs/ [retrieved on 2013-04-05]
- "3rd Generation Partnership Project; Technical Specification Group Radio Access Network; Study on Small Cell enhancements for E-UTRA and E-UTRAN - Higher layer aspects (Release", 3GPP DRAFT; 36842-C00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 29 December 2013 (2013-12-29), XP050752647, Retrieved from the Internet: URL:http://www.3gpp.org/ftp/tsg_ran/WG2_RL 2/Specifications/201312_final_specs_after_ RAN_62/ [retrieved on 2013-12-29]

## Description

### Background of the Invention

### 1. Field of the Invention

The present invention relates to a method used in a wireless communication system and related communication device, and more particularly, to a method of handling a cell addition for dual connectivity and related communication device.

### 2. Description of the Prior Art

A long-term evolution (LTE) system supporting the 3rd Generation Partnership Project (3GPP) Rel-8 standard and/or the 3GPP Rel-9 standard are developed by the 3GPP as a successor of a universal mobile telecommunications system (UMTS), for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmission/reception, UL multiple-input multiple-output (MIMO), etc. For a UE and an eNB to communicate with each other in the LTE-A system, the UE and the eNB must support standards developed for the LTE-A system, such as the 3GPP Rel-10 standard or later versions.

Small cells controlled by low-power base stations (e.g., low power NBs/eNBs) are considered to solve fast-growing mobile traffic. The small cells can be deployed in hot spots for both indoor and outdoor scenarios. A low-power base station generally means a base station with a transmission power lower than that of a macro cell base station (e.g., normal NB/eNB). For example, a pico cell base station and a femto cell base station are usually considered as low-power base stations. A UE may simultaneously communicate with a macro cell base station and a low-power base station, to realize dual connectivity. In this situation, the UE can perform transmissions and/or receptions (e.g., of data, packets, messages and/or control information) via both the macro cell base station and the low-power base station. The data throughput increases due to simultaneous data transmissions from/to the macro base station, when the dual connectivity is operated. However, it is unknown how to configure a cell of the low-power base station to the UE to enable the dual connectivity, i.e., adding a cell of the low-power base station while the UE has connected to the macro cell base station. In addition, it is also unknown how to assign a cell radio network temporary identifier (C-RNTI) of the cell of the low-power base station to the UE when realizing the dual connectivity.

"3rd.Generation Partnership Project; Technical Specification Group Radio Access Network; Evolved Universal Terrestrial Radio Access (E-UTRA) and Evolved Universal Terrestrial Radio Access Network (E-UTRAN) ; Overall description; Stage 2 (Release 11) ", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, RAN WG2, V11.4.0, 21 December 2012, pages 1-208, in context with "3rd Generation Partnership Project; Technical Specification Group Radio Access Network; Evolved Universal Terrestrial Radio Access Network (E-UTRAN); X2 application protocol (X2AP) (Release 11)", 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, RAN WG3, V11.3.0, 18 December 2012, pages 1-141, and "3rd Generation Partnership Project; Technical Specification Group Radio Access Network; Evolved Universal Terrestrial Radio Access (E-UTRA) ; Radio Resource Control (RRC); Protocol specification (Release 11)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, RAN WG2, V11.2.0, 19 December 2012, pages 1-340, describe procedure to perform a handover between a source eNB and a target eNB of an LTE system.

HUAWEI ET AL: "Analysis of inter-node signalling load for mobility mechanism in small cell deployment", 3GPP DRAFT; R2-131260 ANALYSIS OF INTER-NODE SIGNALLING LOAD FOR MOBILITY MECHANISM IN SMALL CELL DEPLOYMENT, 3RD GENERATION PARTNERSHIP PROJECT (3GPP), MOBILE COMPETENCE CENTRE ; 650, ROUTE DES LUCIOLES , RAN WG2, Chicago, USA; 6 April 2013, discloses that, with the introduction of dual connectivity, compared with handover, the gain on signaling reduction between macro eNB and small cell node is limited. However, it can significantly reduce the signaling load between the E-UTRAN and the CN.

SAMSUNG: "Discussion on inter-ENB Carrier Aggregation", 3GPP DRAFT; R2-131069 DISCUSSION ON INTER-ENB CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , RAN WG2, Chicago, US; 5 April 2013, identifies and evaluates the benefits of UEs having dual connectivity to macro and small cell layers served by different or same carrier and for which scenarios such dual connectivity is feasible and beneficial.

In addition, attention is drawn to EP 2 770 796 A2. This document forms part of the prior art under Art. 54 (3) EPC and discloses a method of handling simultaneous communications in a communication system comprising a UE, a first base station and a second base station, where the UE has been connected to the first base station. The method comprises the first base station determining to allocate a cell of the second base station to the UE; the first base station transmitting a cell addition request message to the second base station in response to the determination, for requesting the second base station to allocate radio resources of the cell of the second base station to communicate with UE; and the first base station transmitting an RRC message to the UE, wherein the first RRC message comprises information related to the security key and information related to the security algorithm.

Thus, how to add the cell to enable the dual connectivity and to assign the C-RNTI are important problems to be solved.

### Summary of the Invention

The present invention therefore provides a method for handling a cell addition for dual connectivity according to the subject-matter of independent claims 1, 10 and 13.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.

### Detailed Description

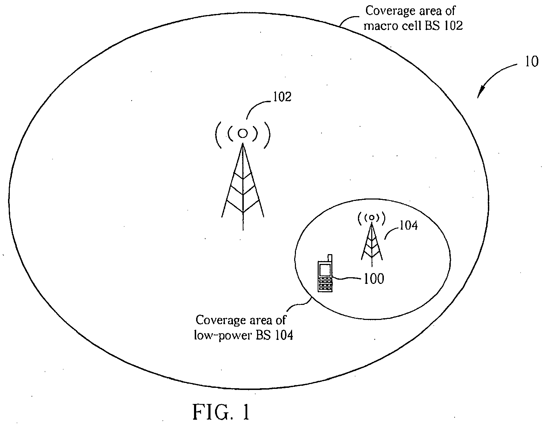

Fig. 1 is a schematic diagram of a wireless communication system 10 according to an example of the present invention. The wireless communication system 10 is briefly composed of a user equipment (UE) 100, a macro cell base station (BS) 102, and a low-power BS 104. In Fig. 1, the UE 100, the macro cell BS 102 and the low-power BS 104 and are simply utilized for illustrating the structure of the wireless communication system 10. Practically, the macro cell BS 102 and/or the low-power BS 104 may be an evolved NBs (eNB) and/or a relay station in an evolved UTRAN (E-UTRAN), a long term evolution (LTE) system, a LTE-Advanced (LTE-A) system or an evolution of the LTE-A system. In addition, the low-power BS 104 may be a pico cell BS or a femto cell BS. In Fig. 1, the low-power BS 104 is in a coverage area of the macro cell BS 102. In another example, the low-power BS 104 may be outside the coverage area of the macro cell BS 102, but the coverage areas of the low-power BS 104 and the macro cell BS 102 may be partly overlapped.

As shown in Fig. 1, the UE 100 is in coverage areas of the macro cell BS 102 and the low-power BS 104. The UE 100 may communicate with the macro cell BS 102 and the low-power BS 104 at the same time. That is, the UE 100 may perform a transmission/reception via both a cell of the macro cell BS 102 and a cell of the low-power BS 104. The UE 100 may be a machine type communication (MTC) device, a mobile phone, a laptop, a tablet computer, an electronic book or a portable computer system. In addition, the macro cell BS 102, the low-power BS 104 or the UE 100 may be seen as a transmitter or a receiver according to its transmission direction, e.g., for an uplink (UL), the UE 100 is the transmitter and the macro cell BS 102 and/or the low-power BS 104 is the receiver, and for a downlink (DL), the macro cell BS 102 and/or the low-power BS 104 is the transmitter and the UE 100 is the receiver.

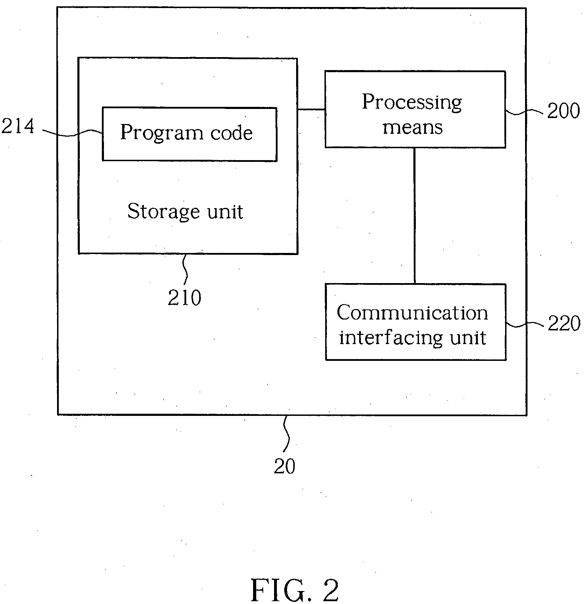

Please refer to Fig. 2, which is a schematic diagram of a communication device 20 according to an example of the present invention. The communication device 20 may the macro cell BS 102 shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk and optical data storage device. The communication interfacing unit 220 is preferably a transceiver and is used to transmit and receive signals (e.g., data, signals, messages and/or packets) according to processing results of the processing means 200.

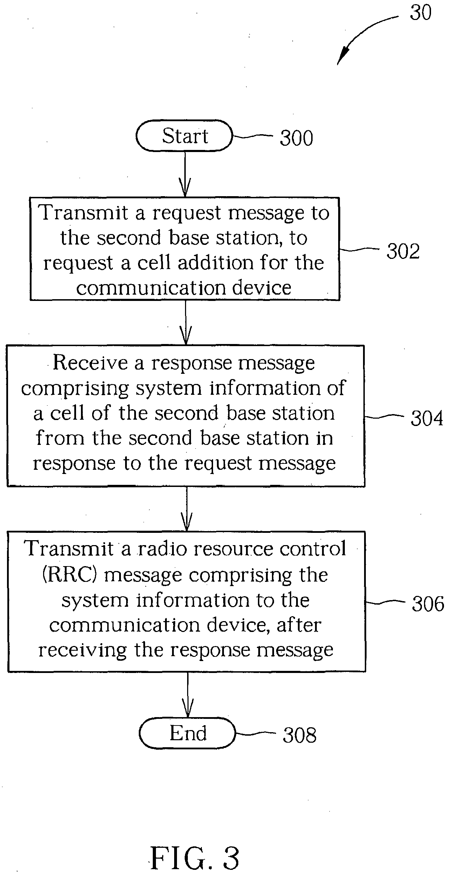

Fig. 3 is a flowchart of a process 30 according to an example of the present invention. The process 30 maybe utilized in a first base station (e.g., the macro cell BS 102) shown in Fig. 2, for handling a cell addition for a communication device (e.g., the UE 100) and a second base station (e.g., the low-power BS 104), to realize dual connectivity., where the communication device has connected to the first base station, e.g., via a cell of the first base station. The process 30 may be compiled into the program code 314 and includes the following steps:
- Step 300:: Start.
- Step 302:: Transmit a request message to the second base station, to request a cell addition for the communication device.
- Step 304:: Receive a response message comprising system information of a cell of the second base station from the second base station in response to the request message.
- Step 306:: Transmit a radio resource control (RRC) message comprising the system information to the communication device, after receiving the response message.
- Step 308:: End.

First note that, the process 30 is performed in the condition that the UE 100 has been communicated with a cell of the macro cell BS 102 and the macro cell BS 102 intends to provide another cell which is under the low-power BS 104 to the UE 100, to realize dual connectivity. According to the process 30, the macro cell BS 102 transmits a request message to the low-power BS 104, to request a cell addition for the UE 100. Then, the macro cell BS 102 receives a response message comprising system information of a cell of the low-power BS 104 from the low-power BS 104 in response to the request message. The macro cell BS 102 transmits a RRC message comprising the system information to the UE 100, after receiving the response message. In this situation, the low-power BS 104 provides the system information of the cell to the macro cell BS 102, after receiving the request message for the cell addition. The system informationis included in the RRC message, and the RRC message is transmitted to the UE 100. Accordingly, the UE 100 may communicate with the cell of the low-power BS 104 according to the system information. Then, the UE 100 may operate regularly according to the system information provided by the low-power BS 104. That is, the UE 100 may communicate with the macro cell BS 102 and the low-power BS 104simultaneously, to realize dual connectivity (i.e. , inter-BS carrier aggregation) according to the above description. As a result, throughput of the UE 100 is improved due to simultaneous communications with both the macro cell BS 102 and the low-power BS 104.

Realization of the present invention is not limited to the above description.

In one example of the process 30, the RRC message sent to UE 100 may be generated by the macro cell BS 102. In another example, the macro cell BS 102 may receive a RRC message comprising system information generated by the low-power BS 104, included in the response message, and the macro cell BS 102then forwards the RRC message to the UE 100. Furthermore, the macro cell BS 102 may receive a RRC response message from the UE 100 in response to the RRC message. That is, the UE 100 may acknowledge the reception of the RRC message (including the system information), after receiving the RRC message. Then, the macro cell BS 102 may transmit a cell addition confirm to the low-power BS 104, to confirm the cell addition, e.g., to notify the low-power BS 104 that the UE 100 has been acknowledged the cell addition.

Detail of the system information mentioned in the process 30 is not limited herein. For example, the system information may include a UL configuration of the cell of the low-power BS 104 and/or a DL configuration of the cell of the low-power BS 104.That is, the UL configuration and/or the DL configuration to be configured to the UE 100 may be included in the system information. In one example, the UL configuration may include a UL carrier frequency, a UL bandwidth, additional spectrum emission, a parameter p-Max, a UL power control, a sounding UL reference signal (RS) configuration, a UL cyclic prefix length, a physical random access channel (PRACH) configuration, a physical UL shared channel (PUSCH) configuration, a random access channel (RACH) configuration and/or a time-division duplexing (TDD) configuration. In another example, the DL configuration may include a DL bandwidth, antenna information, a multicast-broadcast single-frequency network (MBSFN) subframe configuration, a physical HARQ indicator channel (PHICH) configuration, a physical DL shared channel (PDSCH) configuration and a TDD configuration. Thus, the UE 100 may communicate with the cell of the low-power BS 104 regularly according to the system information.

It is possible that a configuration (e.g., which controls maximum transmission power) of the cell (which is added by the process 30) of the low-power BS 104 is changed (i.e., updated). The low-power BS 104may need to update the original system information of the cell to new system information. The macro cell BS 102 may receive the new system information of the cell from the low-power BS 104, when the system information is updated to the new system information. In this situation, the macro cell BS 102 may transmit a RRC message including the new system information to the UE 100.Accordingly, the UE 100 may communicate with the cell of the low-power BS 104 according to the new system information. Alternatively, when in the same situation that low-power BS 104updates the original system information of the cell to new system information, the macro cell BS 102 may transmit a RRC message to remove the cell from the configuration of the UE 100 instead of providing the new system information to the UE 100.It may be difficult for the UE 100 to update a configuration of the cell according to the new system information in certain situations, e.g., when timing for applying the new system information cannot be synchronized between the UE 100 and the low-power BS 104 is not perfect. Thus, a simple solution to solve the change of the configuration of the cell may be simply removing the cell and adding the cell again by using the process 30 and the previous description.

The macro cell BS 102 may further receive a first cell radio network temporary identifier (C-RNTI) of the cell of the low-power BS 104, after transmitting the request message for cell addition to the low-power BS 104 according to the process 30. Then, the macro cell BS 102 forwards the first C-RNTI of the cell of the low-power BS 104to the UE 100. That is, according to the present invention, the first C-RNTI of the cell of the low-power BS 104is determined by the low-power BS 104, and is transmitted to the macro cell BS 102.Thus, the low-power BS 104 communicates with the UE 100 according to (e.g., by using) the first C-RNTI, and the macro cell BS 102 communicates with the UE 100 according to (e.g., by using) a second C-RNTI of the macro cell BS 102. The second C-RNTI may be determined by the macro cell BS 102, and be transmitted to the UE 100 before the macro cell BS 102transmits the request message for cell addition to the low-power BS 104. The low-power BS 104 may dynamically allocate DL resources and/or UL resources to the UE 100 according to the first C-RNTI on a Physical Downlink Control Channel (PDCCH) or on an Enhanced PDCCH (EPDCCH) via the cell of the low-power BS 104. The macro cell BS 102 may dynamically allocate DL resources and/or UL resources to the UE 100 according to the second C-RNTI on a PDCCH or on an EPDCCH via the cell of the macro cell BS 102. In other words, the UE should monitor the PDCCH or the EPDCCH transmitted by the low-power BS 104 according to the first C-RNTI, and monitor the PDCCH or the by the macro cell BS 102 according to the second C-RNTI.

In general, the UE 100 needs to perform a random access procedure before the UE 100 starts to communicate with a cell, e.g., the cell of the low-power BS 104,after the UE 100 receives the RRC message for adding the cell of the low-power BS 104. According to the present invention, the macro cell BS 102 may receive information of a random access preamble for the cell of the low-power BS 104 from the low-power BS 104, after transmitting the request message for cell addition to the low-power BS 104. Then, the macro cell BS 102 transmits the information of the random access preamble to the UE 100.That is, the information of the random access preamble is determined by the low-power BS 104, and is forwarded to the UE 100 via the aid of the macro cell BS 102. Then, the UE 100 may transmit the random access preamble via the resource to the cell of the low-power BS 104 to perform the random access procedure.

Different from the above-mentioned transmitting the random access preamble to the UE 100 via the macro cell BS 102, in another example, the low-power BS 104 may broadcast the information of the random access preamble, including an assignment of at least one of the random access preamble and a resource (e.g., time and/or frequency) for UE 100 transmitting the random access preamble, such that the UE 100 may receive the assignment of random access preamblein the added cell. The assignment of the random access preamble may indicate only one random access preamble, such that the UE 100 may transmit the random access preamble via the resource to the cell of the low-power BS 104 to perform the random access procedure. In another example, the assignment of the random access preamble may indicate a plurality of random access preambles. The UE 100 needs to select a random access preamble from the random access preambles first, and then performs the random access procedure by using the random access preamble.

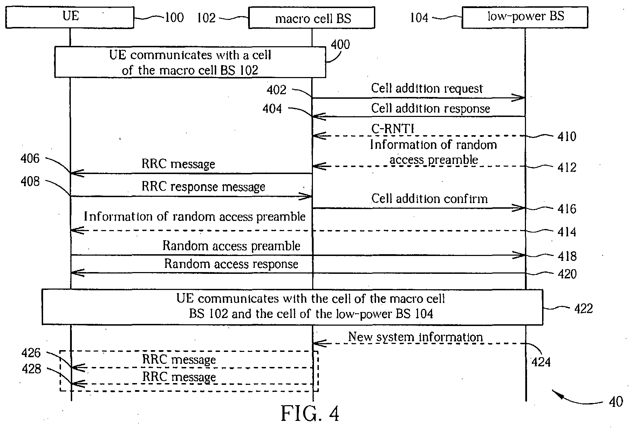

Fig. 4 is a flowchart of a process 40 according to an example of the present invention. The process 40 is an example for illustrating the above description, including the process 30 and further examples. As shown in Fig. 4, the UE 100 has been communicated with a cell of the macro cell BS 102 (step 400).The macro cell BS 102 intends to realize dual connectivity (i.e., inter-BS carrier aggregation) for the UE 100, to improve throughput of the UE 100. The macro cell BS 102 transmits a cell addition request to the low-power BS 104, to request a cell addition for the UE 100 (step 402). The low-power BS 104 transmits a cell addition response including system information of a cell of the low-power BS 104 to the macro cell BS 102, to respond to the cell addition request (step 404). Then, the macro cell BS 102 transmits a RRC message including the system information to the UE 100 after receiving the cell addition response (step 406).The UE 100 transmits a RRC response message to acknowledge the reception of the RRC message including the system information (step 408).

It should be noted that a C-RNTI of the cell of the low-power BS 104 may be included in the cell addition response (step 404). In another example, the C-RNTI may be transmitted to the macro cell BS 102 via another message (step 410). In either case, the C-RNTI may be included in the RRC message (step 406)by the macro cell BS 102, to provide the C-RNTI to the UE 100.

Similarly, information of a random access preamble for the cell of the low-power BS 104 may be included in the cell addition response (step 404), or may be transmitted to the macro cell BS 102 via another message (step 412).In one example, the information of the random access preamble may be included in the RRC message (step 406) by the macro cell BS 102, to provide the information to the UE 100. In another example, the information of the random access preamble may be broadcasted by the low-power BS 104 on associated channel of the cell, e.g., a broadcast channel,a paging channel, a PDCCH or an EPDCCH (step 414). The low-power BS 104 may broadcast the information of the random access preamble after the low-power BS 104 receives a cell addition confirm message (step 416) sent by the macro cell BS 102 for confirming the cell addition. Whatever the low-power BS 104 broadcasts or transmits the information of the random access preamble via the macro cell BS 102, the UE 100 may receive the information of the random access preamble in the cell of the low-power BS 104.

The UE 100 may transmit a random access preamble according to the information of the random access preamble to the cell of the low-power BS 104, to perform a random access procedure (step 418). Accordingly, the UE 100 may receive a random access response including a random access preamble identity, a temporary C-RNTI, an uplink grant and a timing advance command from the cell of the low-power BS 104 (step 420).The UE 100 may start to communicate with the cells of the macro cell BS 102 and the low-power BS 104, if the random access procedure is performed successfully (step 422).

It should be noted that the UE 100 may determine whether the random access procedure is performed successfully or not according to a type of the random access procedure (e.g., contention-based or contention-free) which may be indicated by the information of random access preamble.

In one example, the UE 100 may receive the information of random access preamble via the broadcast channel or the paging channel, and in this situation, the UE 100 transmits a Medium Access Control (MAC) protocol data unit (PDU) including the C-RNTI of the cell of the low-power BS 104, to the low-power BS 104, by using the uplink grant included in a random access response sent from low-power BS 104 for contention resolution. Later, after the UE receives an UL grant or a DL assignment addressed by the C-RNTI of the cell of the low-power BS 104 on a PDCCH or an EPDCCH via the cell the low-power BS 104,the UE 100 determines that the random access procedure is performed successfully.

In another example, the UE 100 may receive the information of random access preamble via the PDCCH or the EPDCCH, and in this situation, the UE 100 determines that the random access procedure is performed successfully after the UE receives the random access response including a random access preamble identity identifying the random access preamble transmitted in step 418.

As stated previously, a configuration (e.g., transmission power) of the cell of the low-power BS 104 may be changed. The low-power BS 104may transmit new system information of the cell to the macro cell BS 102 to update the original system information (step 424). The macro cell BS 102 may transmit a RRC message including the new system information to the UE 100 (step 426), such that the UE 100 may communicate with the cell of the low-power BS 104 according to the new system information. Alternatively, the macro cell BS 102 maytransmit a RRC message to remove the cell of the low-power BS 104from the configuration of the UE 100 instead of providing the new system information to the UE 100 (step 428). It should be noted that the update of the system information may occur in various time instants, and is not limited to the illustration (i.e., steps 424-428) shown in Fig. 4.

Those skilled in the art can easily obtain variants of the process 40 according to the previous description, and is not narrated herein.

The abovementioned steps of the processes including suggested steps may be realized by means that could be a hardware, a firmware known as a combination of a hardware device and computer instructions and data that reside as read-only software on the hardware device, or an electronic system. Examples of hardware may include analog, digital and mixed circuits known as microcircuit, microchip, or silicon chip. Examples of the electronic system may include a system on chip (SOC), system in package (SiP), a computer on module (COM), and the communication device 20.

To sum up, the present invention provides a method for handling a cell addition for dual connectivity. A communication device which has been communicating with a macro cell BS may communicate with a low-power BS regularly according to system information provided by the low-power BS. As a result, throughput of the communication device is improved due to simultaneous communications with both the macro cell BS and the low-power BS.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a cell addition for dual connectivity in a communication system comprising a communication device, a first base station and a second base station, the communication device being connected to the first base station, the method being utilized in the first base station and comprising:
transmitting a request message to the second base station, for requesting a cell addition for the communication device (302, 402) ;
receiving a response message comprising system information of a cell of the second base station from the second base station in response to the request message (304, 404);
transmitting a first radio resource control, RRC, message comprising the system information to the communication device, after receiving the response message (306, 406) ; and receiving a RRC response message from the communication device in response to the first RRC message (408);
wherein the system information comprises an uplink configuration of the cell and/or a downlink configuration of the cell;
wherein the uplink configuration comprises at least one of an uplink carrier frequency, an uplink bandwidth, additional spectrum emission, a parameter p-Max, an uplink power control, a sounding uplink reference signal configuration, an uplink cyclic prefix length, a physical random access channel configuration, a physical uplink shared channel configuration, a random access channel configuration and a time-division duplexing, TDD, configuration; and
wherein the downlink configuration comprises at least one of at least one of a downlink bandwidth, antenna information, a multicast-broadcast single-frequency network subframe configuration, a physical HARQ indicator channel configuration, a physical downlink shared channel configuration and a time-division duplexing, TDD, configuration.

2. The method of claim 1, wherein the first RRC message is generated by the first base station.

3. The method of claim 1, wherein the step of transmitting the first RRC message comprising the system information to the communication device comprises:
receiving the first RRC message generated by the second base station included in the response message; and
forwarding the first RRC message to the communication device.

4. The method of claim 1, further comprising:
receiving new system information of the cell from the second base station, when the system information is updated to the new system information (424).

5. The method of claim 4, further comprising:
transmitting a second RRC message comprising the new system information to the communication device (426).

6. The method of claim 4, further comprising:
transmitting a second RRC message to the communication device, to remove the cell from the configuration of the communication device (428).

7. The method of claim 1, further comprising:
receiving a cell radio network temporary identifier, C-RNTI, of the cell from the second base station, after transmitting the request message to the second base station (410); and
transmitting the C-RNTI of the cell to the communication device (406).

8. The method of claim 1, further comprising:
receiving information of a random access preamble for the cell from the second base station, after transmitting the request message to the second base station (412); and
transmitting the information of the random access preamble to the communication device (406).

9. The method of claim 8, wherein the information of the random access preamble comprises at least one of an assignment of the random access preamble and a resource for transmitting the random access preamble.

10. A method of handling a cell addition for dual connectivity in a communication system comprising a communication device, a first base station and a second base station, the communication device being connected to the first base station, the method being utilized in the first base station and comprising:
transmitting a request message to the second base station, for requesting a cell addition for the communication device (302, 402);
receiving a response message comprising system information of a cell of the second base station from the second base station in response to the request message (304, 404);
transmitting a first radio resource control, RRC, message comprising the system information to the communication device, after receiving the response message (306, 406);
receiving a RRC response message from the communication device in response to the first RRC message (408);
receiving a cell radio network temporary identifier, C-RNTI, of the cell from the second base station, after transmitting the request message to the second base station (410); and
transmitting the C-RNTI of the cell to the communication device (406) wherein the C-RNTI is used by the second base station to allocate downlink resources and/or uplink resources to the communication device (406).

11. The method of claim 10, further comprising:
receiving information of a random access preamble for the cell from the second base station, after transmitting the request message to the second base station (412); and
transmitting the information of the random access preamble to the communication device (406).

12. The method of claim 10, wherein the information of the random access preamble comprises at least one of an assignment of the random access preamble and a resource for transmitting the random access preamble.

13. A method of handling a cell addition for dual connectivity in a communication system comprising a communication device, a first base station and a second base station, the communication device being connected to the first base station, the method being utilized in the first base station and comprising:
transmitting a request message to the second base station, for requesting a cell addition for the communication device (302, 402) ;
receiving a response message comprising system information of a cell of the second base station from the second base station in response to the request message (304, 404);
transmitting a first radio resource control, RRC, message comprising the system information to the communication device, after receiving the response message (306, 406);
receiving a RRC response message from the communication device in response to the first RRC message (408);
receiving information of a random access preamble for the cell from the second base station, after transmitting the request message to the second base station (412); and
transmitting the information of the random access preamble to the communication device (406), wherein the information of the random access preamble is used by the communication device to perform a random access procedure to the second base station.

14. The method of claim 13, wherein the information of the random access preamble comprises at least one of an assignment of the random access preamble and a resource for transmitting the random access preamble.

15. A communication device for handling a cell addition for dual connectivity, comprising means for carrying out the steps of any one of preceding claims.

## Patentansprüche

1. Ein Verfahren zum Handhaben einer Hinzufügung einer Zelle bzw. einer Zellenhinzufügung für duale Konnektivität in einem Kommunikationssystem, das eine Kommunikationseinrichtung, eine erste Basisstation und eine zweite Basisstation aufweist, wobei die Kommunikationseinrichtung mit der ersten Basisstation verbunden ist, wobei das Verfahren in der ersten Basisstation genutzt wird und Folgendes aufweist:
Senden einer Anfragenachricht an die zweite Basisstation, um eine Zellenhinzufügung für die Kommunikationseinrichtung (302, 402) anzufragen;
Empfangen einer Antwortnachricht, die Systeminformation einer Zelle der zweiten Basisstation aufweist, von der zweiten Basisstation ansprechend auf die Anfragenachricht (304, 404);
Senden einer ersten Funkressourcensteuerungs- bzw. RRC-Nachricht (RRC = radio resource control), die die Systeminformation aufweist, an die Kommunikationseinrichtung, und zwar nach dem Empfangen der Antwortnachricht (306; 406); und
Empfangen einer RRC-Antwortnachricht von der Kommunikationseinrichtung ansprechend auf die erste RRC-Nachricht (408);
wobei die Systeminformation eine Uplink- bzw. Aufwärtsverbindungskonfiguration der Zelle und/oder eine Downlink- bzw. Abwärtsverbindungskonfiguration der Zelle aufweist;
wobei die Aufwärtsverbindungskonfiguration wenigstens eines von Folgendem aufweist: eine Aufwärtsverbindungsträgerfrequenz, eine Aufwärtsverbindungsbandbreite, zusätzliche Spektrumemission, einen Parameter p-Max, eine Aufwärtsverbindungsleistungssteuerung, eine Sondierungs- bzw. Sounding-Aufwärtsverbindungsreferenzsignalkonfiguration, eine Länge eines zyklischen Präfix der Aufwärtsverbindung, eine Konfiguration eines physischen Kanals mit Direktzugriff bzw. eines physischen Random-Access-Kanals und eine Zeitduplex- bzw. TDD-Konfiguration (TDD = time-division duplexing); und
wobei die Abwärtsverbindungskonfiguration wenigstens eines von Folgendem aufweist:
eine Abwärtsverbindungsbandbreite, Antenneninformation, eine Multicast-Broadcast-Einzelfrequenz-Netzwerksubrahmenkonfiguration, eine Konfiguration eines physischen HARQ-Indikator-Kanals, eine Konfiguration eines physischen, gemeinsam verwendeten Abwärtsverbindungskanals und eine Zeitduplex- bzw. TDD-Konfiguration (TDD = time-division duplexing).

2. Verfahren nach Anspruch 1, wobei die erste RRC-Nachricht durch die erste Basisstation generiert wird.

3. Verfahren nach Anspruch 1, wobei der Schritt des Sendens bzw. Übertragens der ersten RRC-Nachricht, die die Systeminformation aufweist, an die Kommunikationseinrichtung Folgendes aufweist:
Empfangen der ersten RRC-Nachricht, die durch die zweite Basisstation generiert wird, die in der Antwortnachricht enthalten ist; und
Weiterleiten der ersten RRC-Nachricht an die Kommunikationseinrichtung.

4. Verfahren nach Anspruch 1, das weiter Folgendes aufweist:
Empfangen neuer Systeminformation der Zelle von der zweiten Basisstation, wobei die Systeminformation auf die neue Systeminformation (424) aktualisiert wird.

5. Verfahren nach Anspruch 4, das weiter Folgendes aufweist:
Senden einer zweiten RRC-Nachricht, die neue Systeminformation aufweist, an die Kommunikationseinrichtung (426).

6. Verfahren nach Anspruch 4, das weiter Folgendes aufweist:
Senden einer zweiten RRC-Nachricht an die Kommunikationseinrichtung, um die Zelle aus der Konfiguration der Kommunikationseinrichtung (428) zu entfernen.

7. Verfahren nach Anspruch 1, das weiter Folgendes aufweist:
Empfangen eines temporären Identifikators eines Zellenfunknetzwerks bzw. eines C-RNTI (C-RNTI = cell radio network temporary identifier) der Zelle von der zweiten Basisstation nach dem Senden der Anfragenachricht an die zweite Basisstation (410); und
Senden des C-RNTI der Zelle an die Kommunikationseinrichtung (406).

8. Verfahren nach Anspruch 1, das weiter Folgendes aufweist:
Empfangen von Information einer Direktzugriffs- bzw. Random-Access-Präambel für die Zelle von der zweiten Basisstation nach dem Senden der Anfragenachricht an die zweite Basisstation (412); und
Senden der Information der Direktzugriffspräambel an die Kommunikationseinrichtung (406).

9. Verfahren nach Anspruch 8, wobei die Information der Direktzugriffspräambel eine Zuweisung der Direktzugriffspräambel und/oder eine Ressource zum Senden der Direktzugriffspräambel aufweist.

10. Ein Verfahren zum Handhaben einer Hinzufügung einer Zelle bzw. einer Zellenhinzufügung für duale Konnektivität in einem Kommunikationssystem, das eine Kommunikationseinrichtung, eine erste Basisstation und eine zweite Basisstation aufweist, wobei die Kommunikationseinrichtung mit der ersten Basisstation verbunden ist, wobei das Verfahren in der ersten Basisstation genutzt wird und Folgendes aufweist:
Senden einer Anfragenachricht an die zweite Basisstation, um eine Zellenhinzufügung für die Kommunikationseinrichtung (302, 402) anzufragen;
Empfangen einer Antwortnachricht, die Systeminformation einer Zelle der zweiten Basisstation aufweist, von der zweiten Basisstation ansprechend auf die Anfragenachricht (304, 404);
Senden einer ersten Funkressourcensteuerungs- bzw. RRC-Nachricht (RRC = radio resource control), die die Systeminformation aufweist, an die Kommunikationseinrichtung, und zwar nach dem Empfangen der Antwortnachricht (306; 406);
Empfangen einer RRC-Antwortnachricht von der Kommunikationseinrichtung ansprechend auf die erste RRC-Nachricht (408);
Empfangen eines temporären Identifikators eines Zellenfunknetzwerks bzw. eines C-RNTI (C-RNTI = cell radio network temporary identifier) der Zelle von der zweiten Basisstation nach dem Senden der Anfragenachricht an die zweite Basisstation (410); und
Senden des C-RNTI der Zelle an die Kommunikationseinrichtung (406), wobei der C-RNTI durch die zweite Basisstation verwendet wird, um Abwärtsverbindungsressourcen und/oder Aufwärtsverbindungsressourcen an die Kommunikationseinrichtung (406) zuzuteilen.

11. Verfahren nach Anspruch 10, das weiter Folgendes aufweist:
Empfangen von Information einer Direktzugriffspräambel für die Zelle von der zweiten Basisstation nach dem Senden der Anfragenachricht an die zweite Basisstation (412); und
Senden der Information der Direktzugriffspräambel an die Kommunikationseinrichtung (406).

12. Verfahren nach Anspruch 10, wobei die Information der Direktzugriffspräambel eine Zuweisung der Direktzugriffspräambel und/oder eine Ressource zum Senden der Direktzugriffspräambel aufweist.

13. Ein Verfahren zum Handhaben einer Hinzufügung einer Zelle bzw. einer Zellenhinzufügung für duale Konnektivität in einem Kommunikationssystem, das eine Kommunikationseinrichtung, eine erste Basisstation und eine zweite Basisstation aufweist, wobei die Kommunikationseinrichtung mit der ersten Basisstation verbunden ist, wobei das Verfahren in der ersten Basisstation genutzt wird und Folgendes aufweist:
Senden einer Anfragenachricht an die zweite Basisstation, um eine Zellenhinzufügung für die Kommunikationseinrichtung (302, 402) anzufragen;
Empfangen einer Antwortnachricht, die Systeminformation einer Zelle der zweiten Basisstation aufweist, von der zweiten Basisstation ansprechend auf die Anfragenachricht (304, 404);
Senden einer ersten Funkressourcensteuerungs- bzw. RRC-Nachricht (RRC = radio resource control), die die Systeminformation aufweist, an die Kommunikationseinrichtung, und zwar nach dem Empfangen der Antwortnachricht (306; 406);
Empfangen einer RRC-Antwortnachricht von der Kommunikationseinrichtung ansprechend auf die erste RRC-Nachricht (408);
Empfangen von Information einer Direktzugriffs- bzw. Random-Access-Präambel für die Zelle von der zweiten Basisstation nach dem Senden der Anfragenachricht an die zweite Basisstation (412); und
Senden der Information der Direktzugriffspräambel an die Kommunikationseinrichtung (406), wobei die Information der Direktzugriffspräambel durch die Kommunikationseinrichtung verwendet wird zum Durchführen einer Direktzugriffs- bzw. Random-Access-Prozedur an der zweiten Basisstation.

14. Verfahren nach Anspruch 13, wobei die Information der Direktzugriffspräambel eine Zuweisung der Direktzugriffspräambel und/oder eine Ressource zum Senden der Direktzugriffspräambel aufweist.

15. Eine Kommunikationseinrichtung zum Handhaben einer Zellenhinzufügung für duale Konnektivität, die Mittel aufweist zum Durchführen der Schritte nach einem der vorhergehenden Ansprüche.

## Revendications

1. Procédé pour gérer un ajout de cellule pour une connectivité double dans un système de communication comprenant un dispositif de communication, une première station de base et une deuxième station de base, le dispositif de communication étant connecté à la première station de base, le procédé étant utilisé dans la première station de base et comprenant :
émettre un message de requête vers la deuxième station de base, pour demander un ajout de cellule pour le dispositif de communication (302, 402) ;
recevoir un message de réponse comprenant des informations système d'une cellule de la deuxième station de base, à partir de la deuxième station de base en réponse au message de requête (304, 404) ;
émettre un premier message de contrôle de ressources radio, RRC, comprenant les informations système vers le dispositif de communication, après la réception du message de réponse (306, 406) ; et
recevoir un message de réponse RRC à partir du dispositif de communication en réponse au premier message RRC (408) ;
dans lequel les informations système comprennent une configuration de liaison montante de la cellule et/ou une configuration de liaison descendante de la cellule ;
dans lequel la configuration de liaison montante comprend au moins un élément parmi une fréquence porteuse de liaison montante, une largeur de bande de liaison montante, une émission de spectre additionnel, un paramètre p-Max, une commande de puissance en liaison montante, une configuration de signal de sondage de référence de liaison montante, une longueur de préfixe cyclique de liaison montante, une configuration de canal d'accès aléatoire physique, une configuration de canal partagé de liaison montante physique, une configuration de canal d'accès aléatoire et une configuration de duplexage par séparation temporelle, TDD ; et
dans lequel la configuration de liaison descendante comprend au moins un élément parmi une largeur de bande de liaison descendante, des informations d'antenne, une configuration de sous-trame de réseau à une seule fréquence de multidiffusion-diffusion, une configuration de canal indicateur HARQ physique, une configuration de canal physique partagé de liaison descendante et une configuration de duplexage par séparation temporelle, TDD.

2. Procédé selon la revendication 1, dans lequel le premier message RRC est généré par la première station de base.

3. Procédé selon la revendication 1, dans lequel l'étape d'émission du premier message RRC comprenant les informations système vers le dispositif de communication comprend :
recevoir le premier message RRC généré par la deuxième station de base et inclus dans le message de réponse ; et
communiquer le premier message RRC au dispositif de communication.

4. Procédé selon la revendication 1, comprenant en outre :
recevoir de nouvelles informations système de la cellule à partir de la deuxième station de base, lorsque les informations système sont mises à jour avec les nouvelles informations système (424).

5. Procédé selon la revendication 4, comprenant en outre :
émettre un deuxième message RRC comprenant les nouvelles informations système vers le dispositif de communication (426).

6. Procédé selon la revendication 4, comprenant en outre :
émettre un deuxième message RRC vers le dispositif de communication, pour retirer la cellule de la configuration du dispositif de communication (428).

7. Procédé selon la revendication 1, comprenant en outre :
recevoir un identificateur temporaire de réseau radio cellulaire, C-RNTI, de la cellule à partir de la deuxième station de base, après l'émission du message de requête vers la deuxième station de base (410) ; et
transmettre le C-RNTI de la cellule au dispositif de communication (406).

8. Procédé selon la revendication 1, comprenant en outre :
recevoir des informations d'un préambule d'accès aléatoire pour la cellule à partir de la deuxième station de base, après l'émission du message de requête vers la deuxième station de base (412) ; et
transmettre les informations du préambule d'accès aléatoire au dispositif de communication (406).

9. Procédé selon la revendication 8, dans lequel les informations du préambule d'accès aléatoire comprennent au moins l'une d'une affectation du préambule d'accès aléatoire et d'une ressource pour transmettre le préambule d'accès aléatoire.

10. Procédé pour gérer un ajout de cellule pour une connectivité double dans un système de communication comprenant un dispositif de communication, une première station de base et une deuxième station de base, le dispositif de communication étant connecté à la première station de base, le procédé étant utilisé dans la première station de base et comprenant :
émettre un message de requête vers la deuxième station de base, pour demander un ajout de cellule pour le dispositif de communication (302, 402) ;
recevoir un message de réponse comprenant des informations système d'une cellule de la deuxième station de base, à partir de la deuxième station de base en réponse au message de requête (304, 404) ;
émettre un premier message de contrôle de ressources radio, RRC, comprenant les informations système vers le dispositif de communication, après la réception du message de réponse (306, 406) ;
recevoir un message de réponse RRC à partir du dispositif de communication en réponse au premier message RRC (408) ;
recevoir un identificateur temporaire de réseau radio cellulaire, C-RNTI, de la cellule à partir de la deuxième station de base après l'émission du message de requête vers la deuxième station de base (410) ; et
transmettre le C-RNTI de la cellule au dispositif de communication (406), le C-RNTI étant utilisé par la deuxième station de base pour allouer des ressources de liaison descendante et/ou des ressources de liaison montante au dispositif de communication (406).

11. Procédé selon la revendication 10, comprenant en outre :
recevoir des informations d'un préambule d'accès aléatoire pour la cellule à partir de la deuxième station de base, après l'émission du message de requête vers la deuxième station de base (412) ; et
transmettre les informations du préambule d'accès aléatoire au dispositif de communication (406).

12. Procédé selon la revendication 10, dans lequel les informations du préambule d'accès aléatoire comprennent au moins l'une d'une affectation du préambule d'accès aléatoire et d'une ressource pour transmettre le préambule d'accès aléatoire.

13. Procédé pour gérer un ajout de cellule pour une connectivité double dans un système de communication comprenant un dispositif de communication, une première station de base et une deuxième station de base, le dispositif de communication étant connecté à la première station de base, le procédé étant utilisé dans la première station de base et comprenant :
émettre un message de requête vers la deuxième station de base, pour demander un ajout de cellule pour le dispositif de communication (302, 402) ;
recevoir un message de réponse comprenant des informations système d'une cellule de la deuxième station de base, à partir de la deuxième station de base en réponse au message de requête (304, 404) ;
émettre un premier message de contrôle de ressources radio, RRC, comprenant les informations système vers le dispositif de communication, après la réception du message de réponse (306, 406) ;
recevoir un message de réponse RRC à partir du dispositif de communication en réponse au premier message RRC (408) ;
recevoir des informations d'un préambule d'accès aléatoire pour la cellule à partir de la deuxième station de base, après l'émission du message de requête vers la deuxième station de base (412) ; et
transmettre les informations du préambule d'accès aléatoire au dispositif de communication (406), les informations du préambule d'accès aléatoire étant utilisées par le dispositif de communication pour réaliser une procédure d'accès aléatoire vers la deuxième station de base.

14. Procédé selon la revendication 13, dans lequel les informations du préambule d'accès aléatoire comprennent au moins l'une d'une affectation du préambule d'accès aléatoire et d'une ressource pour transmettre le préambule d'accès aléatoire.

15. Dispositif de communication pour gérer un ajout de cellule pour une connectivité double, comprenant des moyens pour réaliser les étapes de l'une quelconque des revendications précédentes.
